# FASCICULE DE BREVET EUROPEEN

(11) **EP 0 818 045 B1**
(45) Date de publication et mention de la délivrance du brevet: **04.08.1999**
(21) Numéro de dépôt: 96910057.7
(22) Date de dépôt: 27.03.1996
(51) Int. Cl.: H01B 3/44

(54) **PROCEDE DE FABRICATION DE MATERIAUX A RIGIDITE DIELECTRIQUE AMELIOREE, ET UTILISATION DES MATERIAUX OBTENUS PAR CE PROCEDE DANS LA FABRICATION DE CABLES DE TRANSPORT D'ENERGIE**
VERFAHREN ZUR HERSTELLUNG VON WERKSTOFFEN MIT VERBESSERTER DIELEKTRISCHEN FESTIGKEIT, VERWENDUNG DER HERGESTELLTEN WERKSTOFFEN ZUR HERSTELLUNG VON STARKSTROMKABELN
METHOD FOR MAKING MATERIALS HAVING IMPROVED DIELECTRIC STRENGTH, AND USE OF THE RESULTING MATERIALS FOR MAKING POWER TRANSMISSION CABLES

(30) Priorité: 28.03.1995 FR 9503617
(43) Date de publication de la demande: 14.01.1998
(73) Titulaire: COMMISSARIAT A L'ENERGIE ATOMIQUE, 75015 Paris (FR)
(72) Inventeur: MARSAC, Didier, F-37260 Monts (FR); HOURQUEBIE, Patrick, F-37270 Veretz (FR)
(74) Mandataire: Des Termes, Monique
(86) Numéro de dépôt international: FR9600455
(87) Numéro de publication internationale: WO9630914

(56) Documents cités:
- EP-A- 0 473 224

## Description

L'invention concerne un procédé de fabrication d'un matériau à rigidité diélectrique améliorée, le matériau lui-même ainsi que l'utilisation du procédé précité dans la fabrication de câbles de transport d'énergie ou de tout autre dispositif nécessitant une isolation électrique.

Plus précisément, l'invention concerne un procédé permettant d'obtenir un tel matériau formé à partir d'un polymère conducteur (simple, polymère conducteur greffé sur un polymère isolant ou copolymère contenant un ou des systèmes conjugués), dispersé dans un polymère isolant ou dans un mélange de polymères isolant.

Généralement, des défauts présents à l'état naturel dans les matériaux et les polymères isolants, comme par exemple des impuretés ou des cavités résultant de la synthèse ou de la mise en forme du matériau, conduisent à des accumulations locales de charges lorsque ce matériau est soumis à un champ électrique. De telles accumulations de charge peuvent être à l'origine de phénomènes de claquage du matériau. De ce fait, des matériaux présentant des caractéristiques de tenue au claquage améliorée ont été mis au point et peuvent être utilisés dans tout dispositif nécessitant une isolation électrique et notamment dans les câbles à très haute tension. Ce type de câble comprend généralement une âme conductrice recouverte d'un écran semiconducteur puis d'une gaine de matériau isolant et enfin d'une gaine de protection extérieure. Dans ces câbles, il est nécessaire d'avoir des constantes et des pertes diélectriques faibles pour réaliser le transport d'énergie sur de grandes distances.

On connaît déjà d'après le document EP 0 507 676 un matériau pour écran semiconducteur utilisable dans la fabrication de câbles haute tension et dans le blindage électromagnétique d'appareils électriques et électroniques. Ce matériau présente une conductivité inférieure à 10⁻⁸S/m mais susceptible de croître sous l'effet d'un champ électrique. Ce matériau comporte une matrice polymérique isolante dans laquelle est incorporé au moins 5 à 70% en poids d'un second polymère conjugué non dopé ou dédopé, non intrinsèquement conducteur, avec une conductivité inférieure à 10⁻⁴S.m⁻¹ mais susceptible de croître sous l'effet d'un champ électrique.

Toutefois, la réalisation de tels matériaux par mélange direct des poudres des différents constituants ne permet pas d'obtenir l'amélioration des propriétés diélectriques du matériau que l'on souhaiterait.

On connaît par ailleurs d'après le document W0 89/01015 une composition composite d'un polymère isolant et d'un polymère conducteur à base de poly(alkylthiophène) dopé par un accepteur ou un donneur d'électrons. La réalisation de ce matériau est obtenue par mélange de poudres du polymère isolant et du polymère conducteur. Le mélange obtenu est mis en forme par des techniques classiques de mise en oeuvre des polymères. Le but poursuivi est alors d'obtenir des mélanges présentant une conductivité généralement comprise entre 10⁻¹⁰ et 100S.cm⁻¹,

On connaît également d'après le document EP 0 385 523 un procédé pour la préparation de polymères électroconducteurs dérivés de 3-alkylthiophènes consistant à réaliser la polymérisation chimique du 3-alkylthiophène au moyen d'un sel ferrique, d'un halogénure d'alkyle et d'eau. Les poly(alkylthiophènes) ainsi obtenus peuvent être mélangés avec des polymères isolants du type polyéthylène et pressés à chaud pour obtenir des plaques ou objets composites. Le but poursuivi est alors d'obtenir des mélanges présentant une conductivité de l'ordre de 10⁻⁶ à 1S.cm⁻¹.

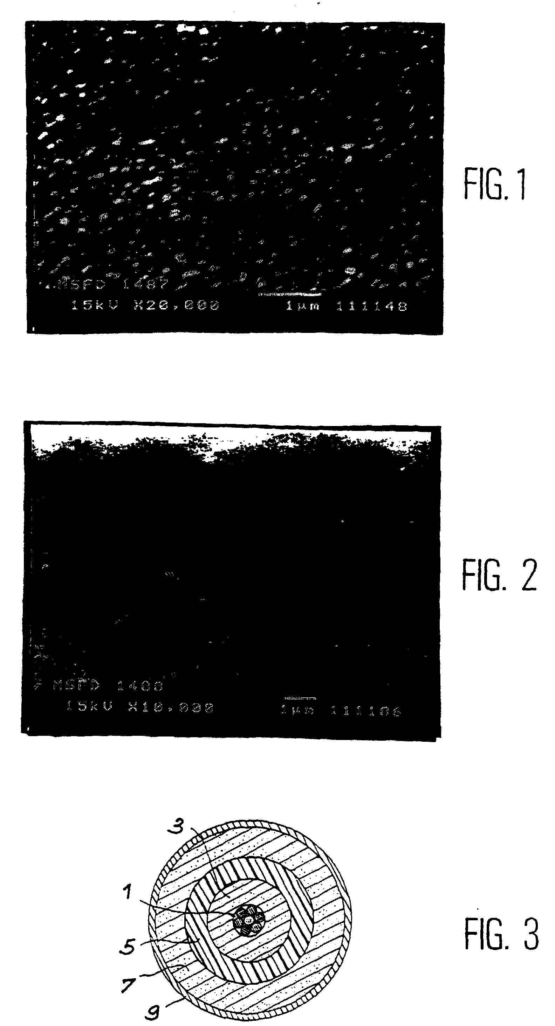

Toutefois d'une manière générale, le mélange de poudres de polymères conducteurs à des taux de l'ordre de 10 à 1000 ppm dans des polymères isolants conduit généralement à des matériaux apparaissant hétérogènes à une échelle de l'ordre du micron lors de leur observation en microscopie électronique à balayage, (voir la figure 1 jointe). A des taux de charge aussi faibles, une mauvaise dispersion à l'échelle du micron ne permet pas d'obtenir l'amélioration recherchée des propriétés diélectriques.

L'invention a pour but de résoudre les inconvénients précédemment évoqués et de mettre au point un procédé de fabrication de matériaux à rigidité diélectrique améliorée permettant d'obtenir des mélanges restant macroscopiquement très isolants, (conductivité de l'ordre de 10⁻¹⁶S.cm⁻¹) et pouvant localement, à une échelle quasi-moléculaire, présenter des conductivités de l'ordre de 10⁻⁹S.cm⁻¹.

Selon les caractéristiques de l'invention, ce procédé comprend les étapes consistant à :
- dissoudre au moins un polymère conducteur dans un solvant organique, de façon à former une solution d'imprégnation,
- imprégner des granulés constitués d'un polymère isolant ou d'un mélange de polymères isolants avec ladite solution d'imprégnation,
- évaporer le solvant de façon à obtenir des granulés de polymère isolant recouverts d'un polymère conducteur,
- sécher lesdits granulés,
- extruder ou mélanger à chaud lesdits granulés pour former un mélange homogène.

De préférence, on prépare ce mélange sous forme de bande ou de jonc ou de tout autre forme pouvant être obtenue par moulage, calandrage, injection et en particulier sous forme de granulés pouvant servir de base pour des mélanges plus dilués.

Grâce à ce procédé de fabrication, on obtient un matériau présentant un taux de charge très faible et homogène à l'échelle de 0,1 micron comme on peut l'observer en microscopie électronique à balayage, ce qui permet d'éviter l'accumulation des charges, sans pour autant modifier la valeur de la constante diélectrique et des pertes diélectriques du polymère isolant utilisé. Les propriétés diélectriques du matériau global sont donc améliorées.

En outre, ce procédé peut s'adapter très rapidement au procédé industriel de fabrication de câbles à haute tension, à partir de polyéthylène réticulable chimiquement (dénommé ci-après PRC). Il suffit alors de remplacer les granulés de PRC classiques par des granulés de PRC préparés par le procédé selon l'invention. Ces granulés peuvent alors être utilisés dans toutes les techniques classiques de mise en forme des polymères, à savoir le moulage, le calandrage, l'injection ou l'extrusion par exemple.

De préférence, le polymère conducteur représente 10 à 1000 ppm du polymère isolant.

De façon avantageuse, les granulés constitués d'un polymère isolant ou d'un mélange de polymères isolants sont imprégnés avec ladite solution d'imprégnation par trempage dans celle-ci. Toutefois, ils pourraient également être obtenus par vaporisation de celle-ci.

De même, le séchage des granulés est réalisé de préférence sous vide et en étuve, à une température dépendant du solvant utilisé. Dans le cas du tétrahydrofurane THF, on peut procéder à température ambiante.

De préférence, le polymère isolant utilisé dans le procédé selon l'invention est choisi parmi les résines thermoplastiques du type résines acryliques, styréniques, vinyliques ou cellulosiques, les polyoléfines, les polymères fluorés, les polyéthers, les polyimides, les polycarbonates, les polyuréthanes, les silicones, leurs copolymères ou des mélanges entre homopolymères et copolymères.

En particulier, ce polymère thermoplastique est choisi parmi le polyéthylène (PE), le polyéthylène basse densité (PEBD), le polyéthylène haute densité (PEHD) et le polyéthylène basse densité linéaire (PEBDL), le polypropylène (PP), l'éthylène-propylène diène monomère (EPDM), le polyvinylidène fluoré (PVDF), l'éthylène butacrylate (EBA) ou les copolymères d'éthylène et d'acétate de vinyle (EVA), pris seuls ou en mélanges.

Le polymère isolant peut être également un polymère thermodurcissable choisi alors parmi les polyesters, les résines époxydes ou les résines phénoliques.

De façon avantageuse, le polymère conducteur présente un point de fusion ou de ramollissement compatible avec sa mise en oeuvre avec le polymère isolant retenu. En outre, la pureté de ce polymère conducteur devra être maximale car sinon les impuretés peuvent avoir une influence sur les caractéristiques de tenue en tension obtenue avec les matériaux de l'invention. Il devra être soluble dans les solvants organiques dans son état dopé (oxydé) ou préférentiellement dans son état dédopé (réduit).

Le polymère conducteur est une charge de type organique possédant un système d'électrons π, délocalisé sur au moins 7 atomes, sur la chaîne principale du polymère ou les ramifications de celle-ci. Ce polymère conducteur peut être soit un polymère conducteur simple, soit un polymère conducteur greffé sur un polymère isolant, soit un copolymère contenant un ou des systèmes conjugués, ou toute molécule organique suffisamment délocalisée ou présentant une conductivité suffisante d'au moins environ 10⁻⁹S.cm⁻¹.

De telles molécules peuvent être par exemple des polypeptides ou la vitamine A. Lorsqu'il s'agit de polymères, celui-ci est choisi de façon avantageuse dans le groupe comprenant le polythiophène, les polyalkylthiophènes, la polyaniline, le polypyrrole, le polyacétylène, le polyparaphénylène, leurs dérivés ou leurs mélanges.

L'invention permet de fabriquer un matériau à rigidité diélectrique améliorée comprenant 10 à 1000 ppm d'un polymère conducteur dispersé dans un polymère isolant et pouvant présenter des hétérogénéités de taille inférieure où égale à 0,1 µm comme on peut l'observer en microscopie électronique à balayage.

Ce matériau obtenu par le procédé selon l'invention présente des caractéristiques diélectriques (constante diélectrique, pertes diélectriques) similaires à celle d'un polymère isolant mais n'accumulent pas les charges au niveau des défauts tels que les impuretés ou les cavités. Enfin, ce matériau présente la propriété de ne pas se charger sous l'influence d'un faisceau électronique de 30 kV dans une chambre de microscope électronique à balayage. La quantité de charges retenues après l'expérience précitée peut être fixée par le taux de polymère conducteur introduit dans le mélange, par les caractéristiques structurales de celui-ci et par la température à laquelle est réalisée l'expérience.

Enfin, l'invention concerne également l'utilisation du procédé selon l'invention dans la fabrication de câbles pour le transport d'énergie ou de dispositifs utilisant un isolant électrique risquant d'être détérioré à la suite d'une accumulation de charges dans l'isolant.

Plus précisément, il est possible de remplacer le polyéthylène réticulable chimiquement (PRC) actuellement utilisé dans les câbles très haute tension par le matériau obtenu par le procédé selon l'invention.

L'invention sera mieux comprise à la lecture de la description suivante et des exemples de réalisation donnés à titre illustratif et non limitatif. Cette description est faite en faisant référence aux dessins joints dans lesquels :
- la figure 1 est une vue au microscope électronique à balayage d'un matériau à rigidité diélectrique fabriqué selon l'art antérieur par simple mélange de poudres de polymères conducteur et isolant, et
- la figure 2 est une vue au microscope électronique à balayage d'un matériau à rigidité diélectrique selon l'invention formé à base de polyéthylène basse densité et de poly(3-octylthiophène), et
- la figure 3 est une vue en coupe d'un exemple de câble de transport d'énergie dont l'isolant est constitué du matériau selon l'invention.

On donnera ci-après plusieurs exemples de matériaux réalisés en utilisant le procédé selon l'invention.

### Exemple 1 : produit formé à base d'un polymère conducteur et d'un polymère isolant

On a synthétisé du poly(octyl-3-thiophène) (ci-après dénommé POT) par oxydation au chlorure ferrique dans du chloroforme suivant la méthode décrite dans l'article de R. Sugimoto, S. Takeda, H.B. Gu, K. Yoshino, Chemistry Express, vol. 1, n°11, pp. 635-638 (1986) et illustrée ci-dessous :

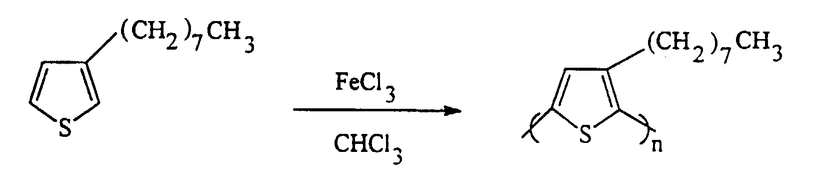

La composition et la répartition des masses molaires du polymère conducteur obtenu sont données ci-après :

| ANALYSE ELEMENTAIRE | | | | | |
|---|---|---|---|---|---|
| | C% | H% | S% | Fe% | Cl% |
| POT (théorique | 74,2 | 9,3 | 16,5 | 0 | 0 |
| POT (FeCl₃) | 73 | 9,1 | 15,6 | 0,8 | <0,3 |

| EVALUATION DES MASSES MOLAIRES MOYENNES | | | | |
|---|---|---|---|---|
| | Mw | Mn | Mw/Mn | DPn |
| POT (FeCl₃) | 238000 | 39800 | 6 | 204 |

avec Mw représentant la masse moléculaire en poids, Mn la masse moléculaire en nombre et DPn le degré de polymérisation en nombre. Ces résultats sont obtenus par chromatographie d'exclusion stérique après étalonnage à l'aide d'échantillons standards de polystyrène.

On a alors dissous 100 mg du polymère précité dans 200 cm³ de tétrahydrofurane (THF), de façon à obtenir la solution d'imprégnation. On ajoute alors dans cette solution d'imprégnation, 200 g de granulés de polyéthylène basse densité (PEBD), c'est-à-dire le polymère isolant.

Le solvant a été évaporé à 50°C à l'aide d'un évaporateur rotatif. A l'issue de cette évaporation, un film de polymère conducteur est déposé sur la surface extérieure des granulés de polymère isolant. Ces granulés sont alors séchés sous vide, à température ambiante pendant 24 heures puis ils sont ensuite extrudés à l'aide d'une filière plate, de façon à obtenir une bande de mélange d'une largeur de 50 mm. Le matériau se présente alors sous la forme d'une bande translucide de couleur rouge brique.

Une analyse en microscopie électronique à balayage ne permet pas de déceler d'hétérogénéité du mélange à l'échelle de 0,1 micron, (voir figure 2). A titre de comparaison, le même matériau réalisé en mélangeant directement la poudre de polymère conducteur et la poudre de polymère isolant avant l'extrusion conduit à un matériau présentant des hétérogénéités de taille de l'ordre de 0,2 micron, (voir figure 1).

Les caractéristiques diélectriques du matériau ainsi obtenu ont été mesurées à l'aide d'un pont RC HP 4284 A et à l'aide d'une cellule de mesure HP 16451 B et ont été comparées à celles du polyéthylène vierge. Pour une fréquence de 1000 Hz, on obtient pour la matrice de polyéthylène basse densité εr=2,2 et tgδ= 3 à 5.10⁻⁴. Pour le mélange PEBD/POT selon l'invention, (500 ppm de POT dans le PEBD), on obtient εr=2,2 et tgδ =2 à 8.10⁻⁴.

Ces résultats montrent que 500 ppm de polymère conducteur ne modifient pas les propriétés diélectriques du polymère isolant de base.

### Exemple 2 : produit formé à base d'un polymère conducteur et d'un polymère isolant

On a synthétisé du poly(butyl-3-thiophène), (ci-après dénommé PBT) suivant la méthode générale décrite dans le document O. Inganäs, W.R. Salaneck, J.E. Osterholm, J. Laakso, Synthetic metals, 22, pp. 395-406 (1988), mais en remplaçant l'iode par du brome et illustrée ci-dessous :

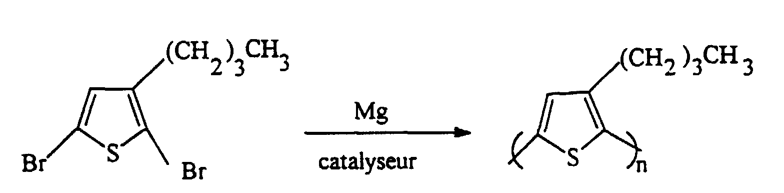

La composition et la répartition des masses molaires du polymère obtenu sont données dans les tableaux ci-après.

| ANALYSE ELEMENTAIRE | | | |
|---|---|---|---|
| | C% | H% | S% |
| PBT (théorique) | 69, 6 | 7,2 | 23,2 |
| PBT (MgX) | 69,5 | 7,3 | 23,1 |

| EVALUATION DES MASSES MOLAIRES MOYENNES | | | | |
|---|---|---|---|---|
| | Mw | Mn | Mw/Mn | DPn |
| PBT (MgX) | 56300 | 12000 | 4,7 | 87 |

avec Mw représentant la masse moléculaire en poids, Mn la masse moléculaire en nombre et DPn le degré de polymérisation en nombre. Les résultats sont obtenus par chromatographie d'exclusion stérique après étalonnage à l'aide d'échantillons standards de polystyrène.

Le polymère obtenu est mis en oeuvre comme dans l'exemple 1 précédent. On obtient une bande translucide de couleur orangée.

Les caractéristiques diélectriques de ce matériau mesuré comme dans l'exemple 1 sont les suivantes :
εr=2, 2, tgδ=4,10⁻⁴.

### Exemple 3 : produit formé à base d'un polymère conducteur et d'un polymère isolant

La même méthode que celle de l'exemple 1 est utilisée pour obtenir des granulés de polyéthylène réticulable par voie chimique (PRC) imprégnés de poly(butyl-3-thiophène). L'étape d'imprégnation des granulés ne dure que quelques minutes correspondant au temps nécessaire pour évaporer le solvant. Cette étape de courte durée n'extrait pas le péroxyde contenu dans le PRC.

Le mélange obtenu est ensuite réticulé pour donner le matériau final.

Les caractéristiques diélectriques de ce matériau mesuré comme dans l'exemple 1 sont les suivantes :
εr=2, 3, tgδ=8.10⁻⁴.

### Exemple 4 : produit formé à base d'un polymère conducteur et d'un polymère isolant

Dans cet exemple, on utilise comme polymère conducteur une poudre de polyaniline dopée par de l'acide dodécylbenzènesulfonique, fabriquée selon le procédé décrit dans l'article de Y.Cao, P. Smith, A.J. Heeger, Synthetic Metals, 48, pp. 91-97 (1992). La poudre de polyaniline a été mise en solution dans du xylène. Cette solution a alors été utilisée pour imprégner des granulés de polyéthylène basse densité (PEBD) suivant le mode opératoire décrit dans l'exemple 1. Les granulés obtenus sont alors extrudés comme dans l'exemple 1. On obtient une bande translucide verte.

Les caractéristiques diélectriques de ce matériau mesuré comme dans l'exemple 1 sont les suivantes :
εr=2, 2, tgδ=5.10⁻⁴.
* Ce mode de réalisation n'est pas couvert par les revendications.

### Exemple 5*: produit formé à base d'un polymère conducteur et d'un polymère isolant

Dans ce cas, on a réalisé un mélange à base de poly(phénylènevinylène) (polymère conducteur) et de polyéthylène basse densité (polymère isolant). Le précurseur du polymère conducteur est déposé sur des grains de polyéthylène et polymérisé par voie chimique. Les granulés sont alors extrudés comme dans l'exemple 1 et l'on obtient une bande translucide jaune.

Les caractéristiques diélectriques de ce matériau mesuré comme dans l'exemple 1 sont les suivantes :
εr=2, 2, tgδ=4.10⁻⁴.

### Exemple 6 : produit formé à base d'un polymère conducteur et d'un mélange de polymères isolants

La même méthode que celle décrite dans l'exemple 1 est utilisée pour traiter un mélange de granulés composé de 30% en masse de polyéthylène haute densité et de 70% en masse de polyéthylène basse densité avec une solution de poly(3-octylthiophène). Les granulés ainsi modifiés sont extrudés sous forme de bande.

Les caractéristiques de ce matériau mesurées comme dans l'exemple 1 sont les suivantes :
εr=2,2 et tgδ=4.10⁻⁴.

### Exemple 7 : produit formé à base d'un polymère isolant et d'un polymère conducteur greffé sur un polymère isolant

Un polymère conducteur greffé est obtenu par une méthode décrite par B. FRANCOIS, T. OLINGA, J. Chim. Phys. (1992) 89, 1079-1084. La première étape de cette synthèse consiste à préparer un copolymère statistique styrène/2 ou 3 vinylthiophène par voie radicalaire. Dans une deuxième étape, on polymérise le thiophène en présence de ce copolymère. Le polymère conducteur greffé obtenu est solubilisé dans le THF. Les granulés de polyéthylène sont traités selon le procédé de l'invention à l'aide de cette solution. Les granulés obtenus sont ensuite extrudés.

Les caractéristiques de ce matériau, mesurées comme dans l'exemple 1 sont les suivantes : εr=2,2 et tgδ=5.10⁻⁴.

### Exemple 8 : produit formé à base d'un polymère isolant et d'un copolymère contenant un système conjugué

Un copolymère polystyrène/polythiophène est obtenu suivant une méthode décrite par B. FRANCOIS, T. OLINGA, J. Chim. Phys. (1992), 89, 1079-1084. Le principe consiste à fixer un motif thiophène ou 2-bromo thiophène à l'extrémité d'un polystyrène "vivant" obtenu par polymérisation anionique, puis à effectuer la polymérisation du thiophène par méthode oxydative, en présence de ce polystyrène fonctionnalisé, en milieu chloroforme et à 5°C pendant une heure. Le copolymère obtenu est solubilisé dans le THF. Les granulés de polyéthylène sont traités selon le procédé de l'invention à l'aide de cette solution. Les granulés obtenus sont ensuite extrudés.

Les caractéristiques de ce matériau, mesurées comme dans l'exemple 1 sont les suivantes : εr=2,2 et tgδ=3.10⁻⁴.

### Exemple 9 : réalisation d'un câble d'énergie

Comme représenté sur la figure 3, ce câble comprend une âme conductrice 1 recouverte successivement d'un écran semi-conducteur interne 3, de l'isolant 5 selon l'invention, d'un écran semi-conducteur externe 7 et d'une gaine de protection 9.

Le câble ainsi obtenu ne présente pas d'accumulation de charges dans l'isolant et a donc de meilleures propriétés de tenue au claquage.

## Revendications

1. Procédé de fabrication de matériaux à rigidité diélectrique caractérisé en ce qu'il comprend les étapes consistant à :
- dissoudre au moins un polymère conducteur dans un solvant organique, de façon à former une solution d'imprégnation,
- imprégner des granulés constitués d'un polymère isolant ou d'un mélange de polymères isolants avec ladite solution d'imprégnation,
- évaporer le solvant de façon à obtenir des granulés de polymère isolant recouverts d'un polymère conducteur,
- sécher lesdits granulés,
- extruder ou mélanger à chaud lesdits granulés pour former un mélange homogène.

2. Procédé de fabrication selon la revendication 1, caractérisé en ce que le polymère conducteur représente 10 à 1000 ppm du polymère isolant.

3. Procédé de fabrication selon la revendication 1, caractérisé en ce que l'imprégnation des granulés s'effectue par trempage de ceux-ci dans la solution d'imprégnation.

4. Procédé de fabrication selon la revendication 1, caractérisé en ce que le polymère isolant est choisi parmi les résines thermoplastiques telles que les résines acryliques, styréniques, vinyliques ou cellulosiques ou parmi les polyoléfines, les polymères fluorés, les polyéthers, les polyimides, les polycarbonates, les polyuréthanes, les silicones, leurs copolymères ou des mélanges entre homopolymères et copolymères.

5. Procédé de fabrication selon la revendication 4, caractérisé en ce que le polymère isolant est choisi parmi le polyéthylène, le polyéthylène basse densité, le poltyéthylène haute densité, le polyéthylène basse densité linéaire, le polypropylène, l'éthylène-propylènediène monomère, le polyvinylidène fluoré, l'éthylène butacrylate ou les copolymères d'éthylène et d'acétate de vinyle, pris seuls ou en mélange.

6. Procédé de fabrication selon la revendication 1, caractérisé en ce que le polymère isolant est choisi parmi les résines thermodurcissables telles que les polyesters, les résines époxydes ou les résines phénoliques.

7. Procédé de fabrication selon la revendication 1, caractérisé en ce que le polymère conducteur présente une conductivité d'au moins environ 10⁻⁹S.cm⁻¹.

8. Procédé de fabrication selon la revendication 7, caractérisé en ce que le polymère conducteur est un polymère conducteur simple, un polymère conducteur greffé sur un polymère isolant ou un copolymère contenant au moins un système conjugué.

9. Procédé de fabrication selon la revendication 7, caractérisé en ce que le polymère conducteur est choisi parmi le polythiophène, les polyalkylthiophènes, la polyaniline, le polypyrrole, le polyacétylène, le polyparaphénylène, leurs dérivés ou leurs mélanges.

10. Utilisation du procédé selon les revendications 1 à 9 dans la fabrication de câbles pour le transport d'énergie ou de dispositifs utilisant un isolant électrique.

## Patentansprüche

1. Verfahren zur Herstellung von Mate-rialien mit dielektrischer Festigkeit, dadurch gekennzeichnet, daß es die Schritte umfaßt, die darin bestehen:
- wenigstens ein Leitfähiges Polymer in einem organische Lösungsmittel aufzulösen, um eine Imprägnierungslösung zu bilden,
- ein Granulat, das aus einem isolierenden Polymer oder einer Mischung isolierender Polymere besteht, mit der genannten Imprägnierungslösung zu imprägnieren,
- das Lösungsmittel zu verdampfen, um ein Granulat von isolierendem Polymer zu erhalten, das mit einem leitfähigen Polymer bedeckt ist,
- das genannte Granulat zu trocknen,
- das genannte Granulat in der Wärme zu extrudieren oder zu mischen, um eine homogene Mischung zu erhalten.

2. Herstellungsverfahren nach Anspruch 1, dadurch gekennzeichnet, daß das leitfähige Polymer 10 bis 1000 ppm des isolierenden Polymers ausmacht.

3. Herstellungsverfahren nach Anspruch 1, dadurch gekennzeichnet, daß die Imprägnierung des Granulats durch dessen Tauchung in die Imprägnierungslösung erfolgt.

4. Herstellungsverfahren nach Anspruch 1, dadurch gekennzeichnet, daß das isolierende Polymer unter den thermoplastischen Harzen wie den Acryl-, Styrol-, Vinyl- oder Celluloseharzen oder unter den Polyolefinen, den fluorhaltigen Polymeren, den Polyethern, den Polyimiden, den Polycarbonaten, den Polyurethanen, den Siliconen, ihren Copolymeren oder Mischungen zwischen Homopolymeren und Copolymeren gewählt wird.

5. Herstellungsverfahren nach Anspruch 4, dadurch gekennzeichnet, daß das isolierende Polymer unter Polyethylen, Polyethylen mit niedriger Dichte, Polyethylen mit hoher Dichte, linearem Polyethylen mit niedriger Dichte, Polypropylen, Poly-(Ethylen-Propylen-Dienmonomer), Polyfluorvinyliden, Poly-(Ethylen-Butacrylat) oder den Copolymeren von Ethylen und Vinylacetat, allein oder in Mischung genommen, gewählt wird.

6. , Herstellungsverfahren nach Anspruch 1, dadurch gekennzeichnet, daß das isolierende Polymer unter den duroplastischen Harzen wie den Polyestern, den Epoxidharzen oder den Phenolharzen gewählt wird.

7. Herstellungsverfahren nach Anspruch 1, dadurch gekennzeichnet, daß das leitfähige Polymer eine Leitfähigkeit von mindestens ungefähr 10⁻⁹ S.cm⁻¹ besitzt.

8. Herstellungsverfahren nach Anspruch 7, dadurch gekennzeichnet, daß das leitfähige Polymer ein einfaches leitfähiges Polymer, ein auf ein isolierendes Polymer gepfropftes leitfähiges Polymer oder ein Copolymer ist, welches mindestens ein konjugiertes System enthält.

9. Herstellungsverfahren nach Anspruch 7, dadurch gekennzeichnet, daß das leitfähige Polymer unter Polythiophen, den Polyalkylthiophenen, Polyanilin, Polypyrrol, Polyacetylen, Polyparaphenylen, ihren Derivaten oder ihren Mischungen gewählt wird.

10. Verwendung des Verfahrens nach den Ansprüchen 1 bis 9 in der Herstellung von Kabeln für den Energietransport oder von Vorrichtungen, welche einen elektrischen Isolator verwenden.

## Claims

1. Process for the production of dielectric strength materials, characterized in that it comprises the following stages:
- dissolving at least one conductive polymer in an organic solvent, so as to form an impregnation solution,
- impregnating granules constituted by an insulating polymer or an insulating polymer mixture with said impregnation solution,
- evaporating the solvent so as to obtain insulating polymer granules covered with a conductive polymer,
- drying said granules,
- hot mixing or extruding said granules to form a homogeneous mixture.

2. Production process according to claim 1, characterized in that the conductive polymer represents 10 to 1000 ppm of the insulating polymer.

3. Production process according to claim 1, characterized in that the impregnation of the granules takes place by soaking the latter in an impregnation solution.

4. Production process according to claim 1, characterized in that the insulating polymer is chosen from among thermoplastic resins such as acrylic, styrene, vinyl or cellulose resins, or among polyolefins, fluoropolymers, polyethers, polyimides, polycarbonates, polyurethanes, silicones, their copolymers or mixtures between homopolymers and copolymers.

5. Production process according to claim 4, characterized in that the insulating polymer is chosen from among polyethylene, low density polyethylene, high density polyethylene, linear low density polyethylene, polypropylene, ethylene-propylene diene monomer, polyvinylidene fluoride, ethylene butacrylate or copolymers of ethylene and vinyl acetate, considered singly or in mixture.

6. Production process according to claim 1, characterized in that the insulating polymer is chosen among thermosetting resins such as polyesters, epoxy resins or phenolic resins.

7. Production process according to claim 1, characterized in that the conductive polymer has a conductivity of at least approximately 10⁻⁹ S.cm⁻¹.

8. Production process according to claim 7, characterized in that the conductive polymer is a single conductive polymer, a conductive polymer grafted onto an insulating polymer or a copolymer containing at least one conjugate system.

9. Production process according to claim 7, characterized in that the conductive polymer is chosen among polythiophene, polyalkylthiophenes, polyaniline, polypyrrole, polyacetylene, polyparaphenylene, their derivatives or their mixtures.

10. Use of the process according to claims 1 to 9 in the manufacture of power transmission cables or devices using an electrical insulator.
